# EUROPEAN PATENT APPLICATION

(11) **EP 4 503 283 A1**
(43) Date of publication of application: **05.02.2025**
(21) Application number: 23780548.6
(22) Date of filing: 28.03.2023
(51) Int. Cl.: H01M 50/204, H01M 10/6555, H01M 10/658, H01M 10/659, H01M 50/107, H01M 50/124, H01M 50/143, H01M 50/213, H01M 50/231

(54) **BATTERY PACK**

(30) Priority: 29.03.2022 JP 2022054010
(71) Applicant: Toppan Holdings Inc., Tokyo 110-0016 (JP)
(72) Inventor: SHIINE Yasuharu, Tokyo 110-0016 (JP); TANABE Junya, Tokyo 110-0016 (JP); KUROKAWA Masato, Tokyo 110-0016 (JP); HONJO Yusaku, Tokyo 110-0016 (JP)
(74) Representative: Hoffmann Eitle
(86) International application number: PCT/JP2023/012561
(87) International publication number: WO 2023/190539

(57) **Abstract**

A battery pack 1A includes: a case 2; a plurality of batteries 3 housed in the case 2; at least one of a heat-insulating material 4 or an endothermic material disposed between the plurality of batteries 3; and a fire extinguisher 5 disposed in the case 2. The heat-insulating material 4 suppresses heat transfer to adjacent batteries when a battery 3 is ignited. The heat-insulating material 4 also blocks heat after the fire is extinguished by the action of the fire extinguisher 5.

## Description

### [Technical Field]

The present invention relates to a battery pack.

### [Background Art]

Lithium-ion batteries are light and have a high electromotive force and a high energy density, and are therefore used for, for example, electronic devices such as laptop computers and mobile phones, and mobile batteries. In addition, lithium-ion batteries are expected to be used as in-vehicle batteries and further used for large energy storage modules. Since recent lithium-ion batteries have high capacity, and the number of cells used in a battery pack has increased, safe battery packs are required. Patent Literature 1 discloses a lithium-ion battery stack having excellent initial fire extinguishing when ignited.

### [Citation List]

### [Patent Literature]

[PTL 1] WO 2020/203684

### [Summary of the Invention]

### [Technical Problem]

The lithium-ion battery stack of Patent Literature 1 increases the initial fire-extinguishing effect at the time of ignition and prevents fire propagation to an adjacent battery by disposing a self-fire-extinguishing layer between adjacent batteries in the stack. However, fire extinguishing only by the self-fire-extinguishing layer is actually sometimes insufficient to prevent fire propagation. Under these circumstances, the present invention aims at providing a battery pack that houses a plurality of batteries and that can sufficiently prevent fire propagation when ignited.

### [Solution to Problem]

Examination by the inventors of the present invention has found that when one of a plurality of batteries housed in a battery pack is ignited, an adjacent battery can be ignited due to residual heat even after the fire is extinguished. In order to prevent this kind of fire propagation, the present invention provides a battery pack including: a case; a plurality of batteries housed in the case; at least one of a heat-insulating material or an endothermic material disposed between the plurality of batteries; and a fire extinguisher disposed in the case.

In this battery pack, at least one of the heat-insulating material or the endothermic material is disposed between the batteries, and therefore can, when a battery is ignited, block heat so as to make it difficult for the heat to be transferred to an adjacent battery. In addition, since at least one of the heat-insulating material or the endothermic material blocks heat after the fire is extinguished by the action of the fire extinguisher, unexpected fire propagation after the initial fire extinguishing can be prevented.

The heat-insulating material may include a material having a thermal conductivity of 0.6 W/(m•K) or less. Such a heat-insulating material has a high heat-insulating effect.

The endothermic material may include a material that exhibits an endothermic reaction at a temperature of 150°C or higher and has an endothermic value of 500 J/g or more. Such an endothermic material has a high endothermic effect.

The fire extinguisher includes a first resin layer, a fire-extinguishing layer, and a second resin in this order, and the fire-extinguishing layer may include a base material and a fire-extinguishing agent laminated on the base material. Here, the fire-extinguishing agent may be solid at ordinary temperature. Such a fire extinguisher has a long shelf life because the fire-extinguishing layer is sandwiched between the resin layers and the fire-extinguishing agent is thereby protected from humidity. From this viewpoint, the first and second resin layers preferably have a water vapor transmission rate at 40°C and 90%RH of 200 g/(m²•day) or less.

The fire extinguisher may include an adhesive layer as the outermost layer, and be attached to an inner surface of the case with the adhesive layer interposed between the fire extinguisher and the inner surface.

The fire extinguisher may be in contact with at least one of the heat-insulating material or the endothermic material. The surface of the fire extinguisher in contact with at least one of the heat-insulating material or the endothermic material may or may not be provided with the aforementioned resin layer.

At least one of the heat-insulating material or the endothermic material may be disposed between the batteries and the fire extinguisher. This configuration can delay the action of the fire extinguisher, and thereby enables the fire extinguisher to deal with flame emitted later from a battery.

The plurality of batteries may be lithium-ion batteries.

### [Advantageous Effects of the Invention]

The present invention can provide a battery pack that houses a plurality of batteries and that can sufficiently prevent fire propagation when ignited.

### [Brief Description of the Drawings]

Fig. 1 is a cross-sectional view of a battery pack according to a first embodiment.
Fig. 2(A) and 2(B) are both cross-sectional views of a fire extinguisher.
Fig. 3(A) is a cross-sectional view of a battery pack according to a second embodiment, and Fig. 3(B) is a cross-sectional view of a battery pack according to a third embodiment.
Fig. 4(A) is a cross-sectional view of a battery pack according to a fourth embodiment, and Fig. 4(B) is a cross-sectional view of a battery pack according to a fifth embodiment.
Fig. 5 is a cross-sectional view of a battery pack according to a sixth embodiment.

### [Description of the Embodiments]

A battery pack according to the present invention includes: a case; a plurality of batteries housed in the case; a fireproof member (at least one of a heat-insulating material or an endothermic material) disposed between the plurality of batteries; and a fire extinguisher disposed in the case. This battery pack is attached to an article other than the battery pack and thereby used for supplying electricity to the article. The battery pack can be attached in any direction. Hereinafter, with reference to the drawings, preferred embodiments of the present invention will be described in detail. In the drawings, the same or corresponding parts are denoted by the same reference sign to omit duplicate description.

### <First embodiment>

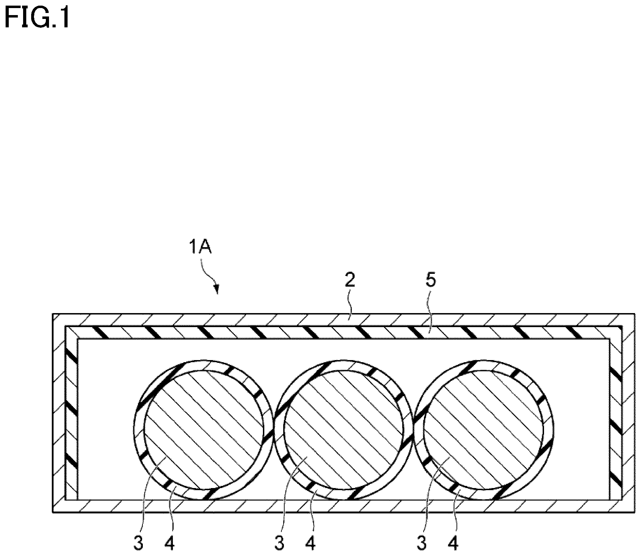

A first embodiment of the present invention will be described. As illustrated in Fig. 1, a battery pack 1A according to the present embodiment includes a case 2 that forms a rectangular parallelepiped and that has three lithium-ion batteries 3 hermetically housed therein. The three lithium-ion batteries 3 are cylindrical, and individually includes a side circumferential surface having a heat-insulating material 4 wound thereon. The three lithium-ion batteries 3 are arranged on the identical surface in the case 2 by fixing with wire so as to face the same direction. Among the inner surfaces of the case 2, the surfaces other than the surface to which the lithium-ion batteries 3 are fixed have a tabular fire extinguisher 5 attached thereto. Here, the fire extinguisher 5 may be attached to the inner surfaces of the case 2 by an adhesive layer provided on one surface of the fire extinguisher 5, or may be attached with tape.

The case 2 may be formed of a resin or a metal. When the case 2 is formed of a resin, examples of the resin include PE (polyethylene), PP (polypropylene), PVC (vinyl chloride resin), PS (polystyrene), an ABS resin, an AS resin, PET (polyethylene terephthalate), PMMA (acrylic resin), PC (polycarbonate), PA (polyamide), POM (acetal resin), PBT (polybutylene terephthalate), a phenolic resin, and an epoxy resin. From the viewpoint of heat resistance, these resins preferably have one or more flame retardants added thereto. Examples of the flame retardants include a halogen-based flame retardant, a phosphorus-based flame retardant, an inorganic flame retardant, a nitrogen-based flame retardant, and a silicon-based flame retardant.

In order to secure heat-insulating properties, the heat-insulating material 4 includes preferably a material having a thermal conductivity of 0.6 W/(m•K) or less, more preferably a material having a thermal conductivity of 0.3 W/(m•K) or less. The heat-insulating material 4 as a whole also preferably has a thermal conductivity less than or equal to this thermal conductivity. The lower limit value of the thermal conductivity is, for example, 0.01 W/(m•K). Examples of the material that constitutes the heat-insulating material 4 include glass cloth, non-flammable paper, a non-flammable board, a mica sheet, glass wool, rock wool, a phenolic resin, and phenolic foam. The heat-insulating material 4 preferably has a sheet-like shape to be used by wrapping it around each of the lithium-ion batteries 3, and the sheet has a thickness of preferably 0.1 mm to 10.0 mm, more preferably 0.2 mm to 0.5 mm. Since the same material provides a higher heat-insulating effect when having a larger thickness, the material and the thickness of the heat-insulating material 4 is determined in consideration of required heat-insulating performance.

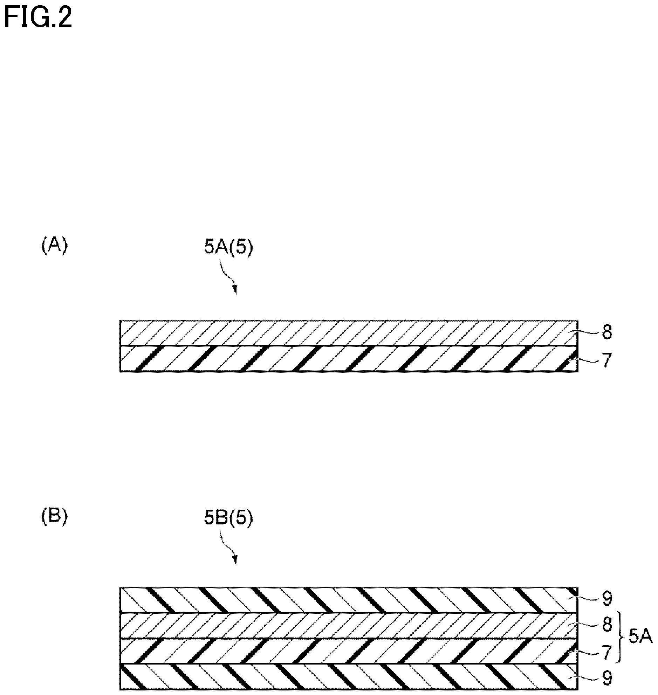

The fire extinguisher includes at least a fire-extinguishing agent. The fire extinguisher may be, for example, a fire extinguisher 5A illustrated in Fig. 2(A) and obtained by laminating a fire-extinguishing agent 8 in a supported manner on a film-shaped base material 7. Alternatively, the fire extinguisher may be a fire extinguisher 5B illustrated in Fig. 2(B) and obtained by sandwiching a fire extinguisher 5A (here, called a "fire-extinguishing layer") between two resin layers 9, 9 (first resin layer, second resin layer). Since a fire-extinguishing agent generally has a high moisture absorbency and high deliquescence, the fire-extinguishing agent is preferably protected by the resin layers 9, 9 for improved storage properties.

The material that constitutes the base material 7 may be a resin or a metal. Examples of the resin include PET (polyethylene terephthalate), LLDPE (linear low-density polyethylene), TAC (cellulose triacetate), PMMA (polymethacrylate ester), PP (polypropylene), PC (polycarbonate), ETFE (ethylene-tetrafluoroethylene), PCTFE (polychlorotetrafluoroethylene), PTFE (polytetrafluoroethylene), and PEN (polyethylene naphthalate). Examples of the metal include aluminum. The base material 7 can have a thickness of, for example 4.5 to 1000 µm, and may have a thickness of 12 to 100 µm or 12 to 50 µm.

The fire-extinguishing agent 8 to be used is not particularly limited, and those having the so-called four fire-extinguishing elements (starving action, cooling action, smothering action, negative catalysis) can be used as appropriate. Examples of the fire-extinguishing agent 8 include, in addition to a general fire-extinguishing chemical (a powder-based fire-extinguishing agent containing a potassium salt as a main component, a general powder-based fire-extinguishing agent such as sodium hydrogen carbonate and a phosphoric acid salt), and sand (standard sand). When such an inorganic fire-extinguishing agent material is used, the fire-extinguishing agent material may be dispersed in an organic solvent, and applied to the base material 7 and dried to form a layer of the fire-extinguishing agent 8. In the present embodiment, a BC fire-extinguishing agent is preferable to extinguish flame generated from a lithium-ion battery 3. Further, the fire-extinguishing agent is preferably solid at ordinary temperature.

The amount of the fire-extinguishing agent 8 can be selected as appropriate according to the strength of the fire at the time of ignition, the fire-extinguishing time required, the available space, or the like. The fire-extinguishing ability is increased and the fire-extinguishing time is shortened with an increase of the amount of the fire-extinguishing agent 8. The amount of the fire-extinguishing agent 8 can be, for example, 0.4 to 3.9 g/cm², and may be 1.0 to 2.5 g/cm².

The fire-extinguishing agent 8 may be mixed with a binder (polymer resin). That is, the fire-extinguishing agent 8 may be a composition including a fire-extinguishing agent (fire-extinguishing agent component) and a binder. The content of the fire-extinguishing agent 8 included in the composition (fire-extinguishing agent composition) can be 70 to 97 mass% relative to the total amount of the fire-extinguishing agent composition. When the fire-extinguishing agent composition including a fire-extinguishing agent and a binder is used as the fire-extinguishing agent 8, a layer of the fire-extinguishing agent 8 may be formed, for example, by applying, to the base material 7, a coating solution including the fire-extinguishing agent composition. A resin having the fire-extinguishing agent 8 mixed therein may be placed and thereby laminated on the base material 7.

As the material that constitutes the resin layers 9, 9, those listed as the constituent material of the base material 7 can be used. From the viewpoint of protecting the fire-extinguishing agent 8, the material preferably has high gas barrier performance, and preferably has a water vapor transmission rate measured at 40°C and 90%RH in accordance with JIS K 7129 of 200 g/(m²•day) or less, more preferably 150 g/(m²•day) or less. Each resin layer 9 can have a thickness of, for example, 25 to 150 µm, and may have a thickness of 30 to 100 µm.

The fire extinguisher 5B may further include a water vapor barrier layer on the outer surface of the resin layers 9, 9. Examples of the water vapor barrier layer include: a polyester resin layer (for example, a PET layer) including a metal oxide vapor deposition layer such as an alumina vapor deposition layer and a silica vapor deposition layer; and a metal foil such as an aluminum foil. When the water vapor barrier layer includes a metal oxide vapor deposition layer, the metal oxide vapor deposition layer may face the side of the fire-extinguishing agent 8. The water vapor barrier layer may have a water vapor transmission rate measured at 40°C and 90%RH in accordance with JIS K 7129 of 10 g/(m²•day) or less, or 1 g/(m²•day) or less. The water vapor barrier layer can have a thickness of, for example, 4.5 to 25 µm, and may have a thickness of 7 to 12 µm.

In the fire extinguisher 5B, the laminating of the fire extinguisher (fire-extinguishing layer) 5A and the resin layers 9, 9 may be performed, for example, by singly producing the fire extinguisher 5A and the resin layers 9, 9 and then laminating them to each other.

For convenience of attachment to the inner surfaces of the case 2, the fire extinguisher 5 has a thickness of preferably 100 µm to 1000 µm, more preferably 300 µm to 500 µm

In the battery pack 1A according to the present embodiment, the heat-insulating material 4 is disposed between the lithium-ion batteries 3, and therefore blocks, when a lithium-ion battery 3 is ignited and the electrolytic solution thereof ignites, the heat of the combustion so as to suppress heat transfer to adjacent batteries. Specifically, due to the presence of the heat-insulating material 4, heat is insulated to the degree in which the temperature of an adjacent battery rises only up to lower than 200°C, and fire propagation to the adjacent battery is therefore prevented. Eventually, the fire-extinguishing agent 8 is discharged from the fire extinguisher 5 and the flame is extinguished. Since the heat-insulating material 4 blocks heat also after the fire is extinguished by the action of the fire extinguisher 5, unexpected fire propagation after initial fire extinguishing can be prevented. By achieving initial fire extinguishing of the battery pack 1A as described above, it is possible to prevent external fire propagation from the battery pack 1A and to reduce the damage caused by ignition.

In the present embodiment, an endothermic material may be used in place of the heat-insulating material 4. Here, the endothermic material more preferably includes a material that exhibits an endothermic reaction at a temperature of 150°C or higher and has an endothermic value of 500 J/g or more. The endothermic material may exhibit an endothermic reaction at a temperature of 180°C or higher, or at a temperature of 200°C or higher. The material that constitutes the endothermic material may have an endothermic value of 600 J/g or more, or 700 J/g or more. Examples of the material that constitutes the endothermic material include aluminum hydroxide-containing paper, aluminum hydroxide, magnesium hydroxide, dawsonite, calcium hydroxide, calcium aluminate, alum, zinc borate hydrate, zinc stannate, boric acid, dihydrate gypsum, zinc nitrate, and calcium carbonate. When including, for example, aluminum hydroxide, the endothermic material generates water due to the flame, and can absorb heat by the latent heat of the water.

The endothermic material preferably has a sheet shape to be used by wrapping around each of the lithium-ion batteries 3, and the sheet preferably has a thickness of 0.1 mm to 1.0 mm, more preferably 0.2 mm to 0.5 mm. Since the same material provides a higher endothermic effect when having a larger thickness, the material and the thickness of the endothermic material are determined in consideration of required endothermic performance.

### <Second embodiment>

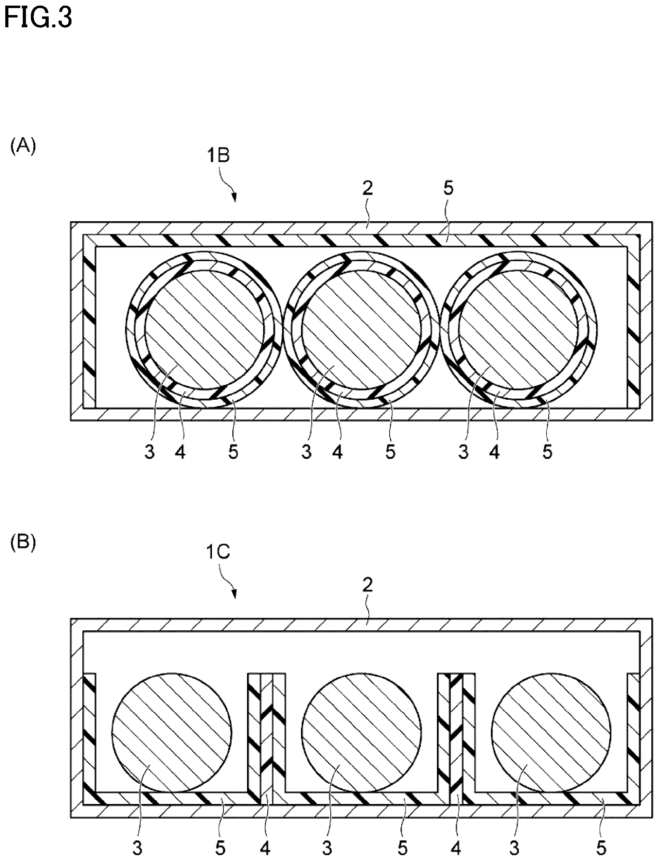

A second embodiment of the present invention will be described. As illustrated in Fig. 3(A), the difference of a battery pack 1B according to the present embodiment from the battery pack 1A according to the first embodiment is that lithium-ion batteries 3 each have a fire extinguisher 5 wrapped therearound. In the present embodiment, the fire extinguisher 5 is further wrapped around a heat-insulating material 4 wrapped around each of the lithium-ion batteries 3. This configuration is expected to accelerate the initial fire extinguishing compared to the battery pack 1A according to the first embodiment.

The fire extinguisher 5 wound around the heat-insulating material 4 preferably has a layer of a fire-extinguishing agent 8 disposed to face the side of the heat-insulating material 4. When a fire extinguisher of the type of fire extinguisher 5B including a resin layer 9 is used, the fire extinguisher may be configured to include no resin layer 9 on the side of the layer of the fire-extinguishing agent 8. Alternatively, the fire extinguisher 5 may include neither a resin layer 9 nor a base material 7 and be formed by applying the fire-extinguishing agent 8 around the heat-insulating material 4.

Also in the present embodiment, an endothermic material may be used in place of the heat-insulating material 4. Endothermic materials that can be used are the same as in the first embodiment.

### <Third Embodiment>

A third embodiment of the present invention will be described. As illustrated in Fig. 3(B), in a battery pack 1C according to the present embodiment, a case 2 is partitioned into compartments, and three lithium-ion batteries 3 are respectively disposed in different compartments. That is, by disposing two tabular heat-insulating materials 4 in parallel in the case 2, the case 2 is partitioned into three equal parts. In these parts, tabular fire extinguishers 5 each formed into a U-shape (a shape formed by bending both ends of a plate toward an identical side, i.e. either the front side or the rear side, at a right angle) are arranged so that the opening portions of the fire extinguishers 5 face the same thickness-wise direction in the case 2. In the U-shapes, the lithium-ion batteries 3 are respectively housed. Consequently, one heat-insulating material 4 and two fire extinguishers 5 positioned on both sides thereof are interposed between the lithium-ion batteries 3.

The battery pack 1C houses the lithium-ion batteries 3 respectively in individual compartments, and therefore makes it difficult for a flame generated by ignition of a lithium-ion battery 3 to come into contact with another lithium-ion battery 3. Accordingly, fire propagation to other lithium-ion batteries 3 is further prevented.

Also in the present embodiment, an endothermic material may be used in place of the heat-insulating material 4. Endothermic materials that can be used are the same as in the first embodiment.

### <Fourth embodiment>

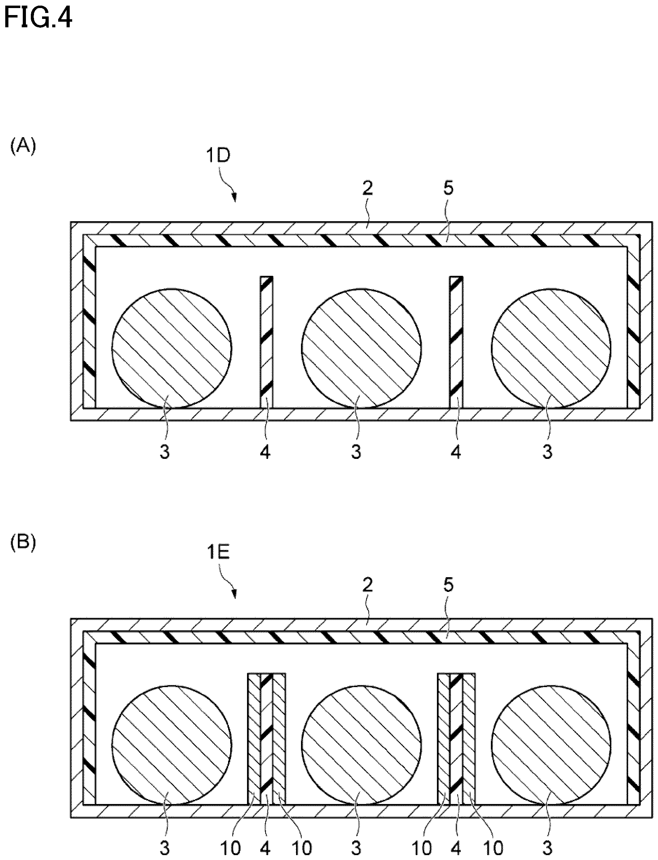

A fourth embodiment of the present invention will be described. As illustrated in Fig. 4(A), the difference of a battery pack 1D according to the present embodiment from the battery pack 1A according to the first embodiment is that a heat-insulating material 4 is not wound around a lithium-ion battery 3, but is disposed for partition as in the third embodiment. That is, two tabular heat-insulating materials 4 are disposed upright and in parallel in a case 2 to partition the case 2 into three equal parts, and lithium-ion batteries 3 are respectively housed in the rooms. In other words, a heat-insulating material 4 is disposed between adjacent lithium-ion batteries 3. The heat-insulating materials 4 are fixed with tape to an inner surface of the case 2.

Also in the present embodiment, an endothermic material may be used in place of the heat-insulating material 4. Endothermic materials that can be used are the same as in the first embodiment.

### <Fifth embodiment>

A fifth embodiment of the present invention will be described. As illustrated in Fig. 4(B), the difference of a battery pack 1E according to the present embodiment from the battery pack 1D according to the fourth embodiment is that two heat-insulating materials 4 disposed upright and in parallel in a case 2 are each, from both surfaces thereof, sandwiched between endothermic materials 10. That is, a tabular body having a three-layer structure of an endothermic material 10, a heat-insulating material 4, and an endothermic material 10 is disposed between adjacent lithium-ion batteries 3.

The present embodiment illustrates a configuration in which a heat-insulating material 4 is sandwiched between two endothermic materials 10, but a configuration is also acceptable in which an endothermic material 10 is instead sandwiched between two heat-insulating materials 4.

### <Sixth embodiment>

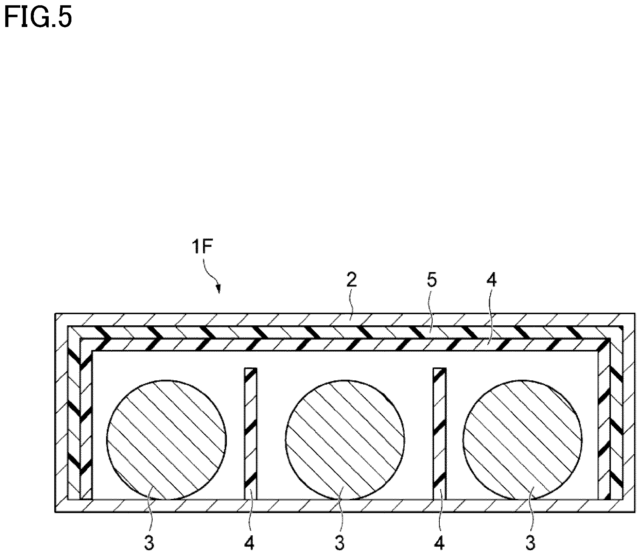

A sixth embodiment of the present invention will be described. As illustrated in Fig. 5, the difference of a battery pack 1F according to the present embodiment from the battery pack 1D according to the fourth embodiment is that a fire extinguisher 5 attached to an inner surface of a case 2 has a heat-insulating material 4 attached thereto. That is, the heat-insulating material 4 is disposed between lithium-ion batteries 3 and the fire extinguisher 5. Here, the heat-insulating material 4 may be attached to the fire extinguisher 5 by an adhesive layer provided on one surface of the heat-insulating material 4, or may be attached with tape. The heat-insulating material 4 may be a laminate sheet produced by integration with the fire extinguisher 5.

The battery pack 1F can delay the action of the fire extinguisher 5 due to the presence of the heat-insulating material 4 when a lithium-ion battery 3 is ignited, and therefore the battery pack 1F can deal with a flame emitted later from the battery. From the viewpoint of realizing more secure initial fire extinguishing, it has conventionally been considered that a fire-extinguishing agent should be emitted from a fire extinguisher 5 as soon as possible when a lithium-ion battery 3 is ignited. However, if a fire-extinguishing agent reacts and is consumed immediately after the ignition of a lithium-ion battery 3, the battery pack cannot deal with flame caused by ignition of an organic gas emitted later from the lithium-ion battery 3. Therefore, by disposing the heat-insulating material 4 between the lithium-ion batteries 3 and the fire extinguisher 5, and thus delaying the timing of the action of the fire extinguisher 5, flame generated later from an ignited lithium-ion battery 3 can be more securely extinguished. Specifically, the time from the ignition of a lithium-ion battery 3 to the reaction of the fire-extinguishing agent (hereinafter, called the "fire-extinguishing agent reaction time" in some cases) is preferably 0.8 seconds or more.

Here, the fire-extinguishing agent reaction time refers to a time from the ignition of a lithium-ion battery 3 to the reaction of a fire-extinguishing agent when the lithium-ion battery 3 is undergoes thermal runaway under the following conditions A and B.

### <Conditions A>

In a case 2 housing a lithium-ion battery 3, a heat-insulating material 4 is disposed at a position between the lithium-ion battery 3 and a fire extinguisher 5.

### <Conditions B>

Thermal runaway is caused in the lithium-ion battery 3 using a nail penetration tester produced in accordance with the tester described in JSA-S1011: 2022.

Regarding the conditions A, the phrase "a heat-insulating material 4 is disposed at a position between the lithium-ion battery 3 and a fire extinguisher 5" means a direction in which the fire extinguisher 5 illustrated in Fig. 5 faces the inner surface of the case 2, and the heat-insulating material 4 faces the lithium-ion batteries 3. Regarding the conditions B, JSA-S1011: 2022 is a JSA standard (issuer: Japanese Standards Association) issued on April 15, 2022 and specifies the "Performance evaluation test of fire propagation suppressing film used in secondary lithium cell systems".

The "time from the ignition of a lithium-ion battery to the reaction of a fire-extinguishing agent" is a time determined on the basis of a video obtained by capturing, with a video camera, the nail penetration test described above. Specifically, the moment of the ignition of a lithium-ion battery means a moment when generation of a spark, a flame, or smoke from a lithium-ion battery is observed by visual inspection of a video captured with the camera. On the other hand, the moment of the reaction of a fire-extinguishing agent means a moment when emission of a fire-extinguishing agent from a fire extinguisher is observed by visual inspection of a video shot with the camera. From the viewpoint of suppressing fire propagation that occurs until the reaction of a fire-extinguishing agent, the fire-extinguishing agent reaction time is preferably 3 seconds or less.

In the sixth embodiment, the material that constitutes the heat-insulating material 4 may be aluminum, an aluminum alloy, graphite, or stainless steel. The heat-insulating material 4 is a heat-insulating material in terms of preventing the fire extinguisher 5 from directly contacting a flame. However, the heat-insulating material 4 formed of such a material having high thermal conductance also functions as a heat-dissipating material and plays a role of adjusting the speed of heat transfer from a flame to the fire extinguisher 5. When the material of the heat-insulating material 4 has a low thermal conductivity, the speed of heat transfer to the fire extinguisher 5 is slow, and therefore the fire-extinguishing agent reaction time can be prolonged. On the other hand, when the material of the heat-insulating material 4 has a high thermal conductivity, the heat locally transferred to the heat-insulating material 4 is presumed to be easily propagated to the whole of the heat-insulating material 4, requiring time for the whole of the fire extinguisher 5 to reach the temperature at which the fire-extinguishing agent is reacted. Consequently, it is presumed that the fire-extinguishing agent reaction time can be prolonged. In this case, the fire extinguisher 5 is presumed to have an extensive area thereof sufficiently heated, and therefore to have a greater area thereof reacted than in the cases of using a material having a lower thermal conductivity and be thus capable of exhibiting stronger fire-extinguishing performance. When the heat-insulating material 4 functions as a heat-dissipating material, the material of the heat-insulating material 4 preferably has a thermal conductivity of 16.0 W/(m•K) or more, and more preferably 32.0 W/(m•K) or more, from the viewpoint of securing heat dissipation. The upper limit value of the thermal conductivity is, for example, 1000 W/(m•K).

Heretofore, preferred embodiments of the present invention have been described, but the present invention is not limited to any of the embodiments. For example, in each of the battery packs 1A, 1B, and 1C, a part of the inner surfaces of the case 2 is not provided with the fire extinguisher 5, but the battery packs 1A, 1B, and 1C may have a configuration in which all the inner surfaces are provided with the fire extinguisher 5.

In the embodiments, the fire extinguisher 5B has been illustrated that has a configuration in which the fire-extinguishing layer (5A) is sandwiched between the two resin layers 9, 9. Here, however, the resin layers 9, 9 may be a part of a hermetically sealable bag. That is, a fire-extinguishing layer may be sealed in a packaging bag formed of the constituent resin of the resin layers 9, 9, and the packaging bag be hermetically sealed by heat sealing. Thereby, a fire extinguisher is formed that includes the packaging bag and the fire-extinguishing layer together, i.e., three layers of the resin layer, the fire-extinguishing layer, and the resin layer. Here, the packaging bag may include a water vapor barrier layer laminated on the outer surface of the resin layer.

The fifth embodiment has illustrated a configuration in which the heat-insulating material 4 and the endothermic material 10 are different members, but the heat-insulating material 4 and the endothermic material 10 may be used as an integrated member thereof, for example, by impregnating glass cloth as the heat-insulating material with a material as the endothermic material.

### [Examples]

Hereinafter, the content of the present invention will be more specifically described by way of examples and comparative examples conducted by producing battery packs having the shape illustrated in Fig. 1. The present invention should not be limited to the following examples.

### <Example 1>

### (Production of fire extinguisher)

A powder-based fire-extinguishing agent as a fire-extinguishing agent is dispersed in ethanol and applied onto a polyethylene terephthalate film ("E7002" manufactured by TOYOBO Co., Ltd.; thickness 50 µm) as a base material. The resultant laminate was dried in an oven set to 100°C for 4 minutes to produce a fire extinguisher having a 200-µm-thick fire-extinguishing agent layer formed therein.

### (Production of battery pack)

A 1.5-mm-thick SUS plate was processed into a U-shape that formed a part of a rectangular parallelepiped having an interior dimension of 80 mm × 80 mm × 40 mm. An adhesive layer was formed on the rear surface of the fire extinguisher produced above, and attached to the entire inner surface of the SUS plate.

Purchased three cylindrical lithium-ion batteries (three-element type, rating 3.7 V, capacity 3.6 Ah) were prepared, and glass cloth ("A335" manufactured by UNITIKA LTD.; thickness 250 µm) as a heat-insulating material was wound around each of the batteries. The three lithium-ion batteries were arranged on a 1.5-mm-thick SUS plate that was to form a floor surface of a battery pack, and covered over with the U-shaped SUS plate produced above. In the covering with the U-shaped SUS plate, the upper surface and the lower surface of the cylindrical shape of the arranged lithium-ion batteries were set as the direction to be covered, and a glass plate was hermetically attached to the surfaces on both open sides.

### (Nail penetration test)

A nail was, from the side of the U-shaped SUS plate, thrust into the middle battery among the arranged three lithium-ion batteries. The nail penetrated the U-shaped SUS plate and the fire extinguisher attached to the inner surfaces thereof and was thrust through the lithium-ion battery, causing the lithium-ion battery to be ignited. The flame was extinguished by the action of the fire extinguisher. No fire propagation to an adjacent battery occurred during the ignition nor after the fire extinguishing.

### <Example 2>

The same fire-extinguishing agent as in Example 1 was applied onto a release PET film to form a sheet-shaped fire-extinguishing agent, which was attached to the inner side of a U-shaped SUS plate and had the release PET film removed therefrom. The production of a battery pack and the nail penetration test were performed in the same manner as in Example 1. No fire propagation to an adjacent battery occurred during the ignition nor after the fire extinguishing.

### <Example 3>

The production of a battery pack and the nail penetration test were performed in the same manner as in Example 1 except that glass cloth was used as the base material. No fire propagation to an adjacent battery occurred during the ignition nor after the fire extinguishing.

### <Example 4>

The fire extinguisher produced in Example 1 was sandwiched between two linear low-density polyethylene films (LLDPE films) and used as the fire extinguisher (appearance of Fig. 2(B)). The production of a battery pack and the nail penetration test were performed in the same manner as in Example 1 except that this fire extinguisher was used. No fire propagation to an adjacent battery occurred during the ignition nor after the fire extinguishing.

### <Example 5>

A powder-based fire-extinguishing agent as the fire-extinguishing agent was laminated on an aluminum foil ("TY-X2" manufactured by Toyo Aluminium K.K.; thickness 35 µm) as the base material. The resultant laminate had a linear low-density polyethylene film (LLDPE film) laminated on the fire-extinguishing-agent side thereof and was used as the fire extinguisher. The production of a battery pack and the nail penetration test were performed in the same manner as in Example 1 except that this fire extinguisher was used. No fire propagation to an adjacent battery occurred during the ignition nor after the fire extinguishing.

### <Comparative Example 1>

The production of a battery pack and the nail penetration test were performed in the same manner as in Example 4 except that the heat-insulating material was not used. Fire propagation to an adjacent battery occurred during ignition and after fire extinguishing.

### <Comparative Example 2>

The production of a battery pack and the nail penetration test were performed in the same manner as in Example 1 except that the fire extinguisher was not used. Fire propagation to an adjacent battery occurred during ignition and after fire extinguishing.

### <Comparative Example 3>

A battery pack was produced using neither a fire extinguisher nor a heat-insulating material, but using only the same lithium-ion batteries and SUS plate as used in Example 1, and the nail penetration test was performed Fire propagation to an adjacent battery occurred during ignition and after fire extinguishing.

Table 1 collectively shows the configurations and the results of the nail penetration test of Examples 1 to 5 and Comparative Examples 1 to 3. It is understandable from these results that the battery packs including both the fire extinguisher disposed on the inner surfaces of the case and the heat-insulating material disposed between the batteries could prevent fire propagation between adjacent batteries.

**[Table 1]**

| | Heat-insulating material | Fire extinguisher | | | | Fire propagation in nail penetration test |
|---|---|---|---|---|---|---|
| | | First synthetic resin layer | Fire-extinguishing layer | | Second synthetic resin layer | |
| | | | Base material | Fire-extinguishing agent | | |
| Example 1 | Glass cloth | - | PET | Yes | - | None |
| Example 2 | Glass cloth | - | - | Yes | - | None |
| Example 3 | Glass cloth | - | Glass cloth | Yes | - | None |
| Example 4 | Glass cloth | LLDPE | PET | Yes | LLDPE | None |
| Example 5 | Glass cloth | LLDPE | Aluminum foil | Yes | - | None |
| Comparative Example 1 | - | LLDPE | PET | Yes | LLDPE | Yes |
| Comparative Example 2 | Glass cloth | - | - | None | - | Yes |
| Comparative Example 3 | - | - | - | None | - | Yes |

### <Example 6>

Aluminum hydroxide-containing paper ("SERAFORM" manufactured by LINTEC Corporation; thickness 150 µm) was used as an endothermic material. The nail penetration test was performed in the same procedure as in Example 1 except that a 10-mm-thick Bakelite plate (made from resin) was used in place of the 1.5-mm-thick SUS plate that was to form a floor surface of a battery pack, the endothermic material was, in place of the heat-insulating material, wound around each of the lithium-ion batteries, and the fire extinguisher used in Example 4 was used. No fire propagation to an adjacent battery occurred during the ignition nor after the fire extinguishing.

### <Example 7>

The nail penetration test was performed in the same procedure as in Example 6 except that the fire extinguisher was not attached to the inner surfaces of the case but was further wound around each of the lithium-ion batteries having the endothermic material wound therearound. No fire propagation to an adjacent battery occurred during the ignition nor after the fire extinguishing.

### <Example 8>

The nail penetration test was performed in the same procedure as in Example 6 except that the endothermic material was not wound around each of the lithium-ion batteries but was disposed by sticking with tape to the Bakelite plate so as to separate the lithium-ion batteries from each other (configuration of Fig. 4(A)) No fire propagation to an adjacent battery occurred during the ignition nor after the fire extinguishing.

### <Example 9>

The nail penetration test was performed in the same procedure as in Example 8 except that the fire extinguisher was not attached to the inner surfaces of the case but was wound around each of the lithium-ion batteries. No fire propagation to an adjacent battery occurred during the ignition nor after the fire extinguishing.

### <Example 10>

The nail penetration test was performed in the same procedure as in Example 8 except that both the endothermic material and the fire extinguisher were disposed to separate the lithium-ion batteries from each other. No fire propagation to an adjacent battery occurred during the ignition nor after the fire extinguishing.

### <Comparative Example 4>

A battery pack was produced using neither a fire extinguisher nor an endothermic material, but using only the same lithium-ion batteries, SUS plate, and Bakelite plate as used in Example 6, and the nail penetration test was performed. Fire propagation to an adjacent battery occurred during ignition and after fire extinguishing.

### <Comparative Example 5>

A battery pack was produced in the same procedure as in Comparative Example 4 except that the fire extinguisher used in Example 4 was attached to the inner surfaces of the case, and the nail penetration test was performed. Fire propagation to an adjacent battery occurred during ignition and after fire extinguishing.

Table 2 collectively shows the configurations and the results of the nail penetration test of Examples 6 to 10 and Comparative Examples 4 and 5. It is understandable from these results that the battery packs including both the endothermic material disposed between the batteries and the fire extinguisher disposed in the case can prevent fire propagation between adjacent batteries.

**[Table 2]**

| | Endothermic material | Disposition of endothermic material and fire extinguisher | | Fire propagation in nail penetration test |
|---|---|---|---|---|
| | | Endothermic material | Fire extinguisher (same fire extinguished as in Example 4) | |
| Example 6 | Aluminum hydroxide-containing paper | Wound around cell | Inner surfaces of case | None |
| Example 7 | Aluminum hydroxide-containing paper | Wound around cell | Wound around cell | None |
| Example 8 | Aluminum hydroxide-containing | Separation between cells | Inner surfaces of case | None |
| | paper | | | |
| Example 9 | Aluminum hydroxide-containing paper | Separation between cells | Wound around cell | None |
| Example 10 | Aluminum hydroxide-containing paper | Separation between cells | Separation between cells | None |
| Comparative Example 4 | - | - | - | Yes |
| Comparative Example 5 | - | | Inner surfaces of case | Yes |

### [Industrial Applicability]

The present invention limits the extent of damage caused by ignition of a battery pack.

### [Reference Signs List]

- 1A, 1B, 1C, 1D, 1E: Battery pack
- 2: Case
- 3: Lithium-ion battery
- 4: Heat-insulating material
- 5 (5A, 5B): Fire extinguisher
- 7: Base material
- 8: Fire-extinguishing agent
- 9: Resin layer
- 10: Endothermic material

## Claims

1. A battery pack comprising:
a case;
a plurality of batteries housed in the case;
at least one of a heat-insulating material or an endothermic material disposed between the plurality of batteries; and
a fire extinguisher disposed in the case.

2. The battery pack according to claim 1, wherein the heat-insulating material includes a material having a thermal conductivity of 0.6 W/(m•K) or less.

3. The battery pack according to claim 1 or 2, wherein the endothermic material includes a material that exhibits an endothermic reaction at a temperature of 150°C or higher and has an endothermic value of 500 J/g or more.

4. The battery pack according to any one of claims 1 to 3, wherein
the fire extinguisher includes a first resin layer, a fire-extinguishing layer, and a second resin in this order, and
the fire-extinguishing layer includes a base material and a fire-extinguishing agent laminated on the base material.

5. The battery pack according to claim 4, wherein the fire-extinguishing agent is solid at room temperature.

6. The battery pack according to claim 4 or 5, wherein the first resin layer and the second resin layer have a water vapor transmission rate at 40°C and 90%RH of 200 g/(m²•day) or less.

7. The battery pack according to any one of claims 1 to 6, wherein
the fire extinguisher includes an adhesive layer as an outermost layer, and
the fire extinguisher is attached to an inner surface of the case with the adhesive layer interposed between the fire extinguisher and the inner surface.

8. The battery pack according to any one of claims 1 to 7, wherein the fire extinguisher is in contact with at least one of the heat-insulating material or the endothermic material.

9. The battery pack according to any one of claims 1 to 8, wherein at least one of the heat-insulating material or the endothermic material is disposed between the plurality of batteries and the fire extinguisher.

10. The battery pack according to any one of claims 1 to 9, wherein the plurality of batteries are lithium-ion batteries.
